# DEMANDE DE BREVET EUROPEEN

(11) **EP 2 487 297 A1**
(43) Date de publication de la demande: **15.08.2012**
(21) Numéro de dépôt: 11362001.7
(22) Date de dépôt: 10.02.2011
(51) Int. Cl.: E02B 8/08, E02B 15/04

(54) **Dispositif pour la récupération de flottants**

(71) Demandeur: Matos da Silva Marques, Antonio, 33220 Eynesse (FR)
(72) Inventeur: Matos da Silva Marques, Antonio, 33220 Eynesse (FR)

(57) **Abrégé**

Dispositif pour la récupération de flottants.

L'invention concerne un dispositif simple pour la récupération de flottants ou gaz, ainsi qu'utilisable comme passe à poissons.

Le dispositif est constitué d'un réservoir (R), réalisé en matériaux étanches et rigides, comprenant au moins un système d'ouverture/fermeture (2) par partie haute et au moins un système d'ouverture/fermeture (1) par partie basse, la quelle est conçue pour fonctionner immergée dans un plan liquide (A).

Le réservoir (R) rempli de liquide (B), ouverture/fermeture du haut (2) fermée et ouverture/fermeture du bas (1) ouverte, crée deux plans liquides communicants, (A et B), qui permettent aux flottants (6), se trouvant sous l'ouverture/fermeture du bas, de s'élever de façon naturelle à la surface du plan liquide (B).

Le dispositif peut être utilisé pour la récupération de flottants ou gaz, ainsi que comme passe à poissons.

## Description

La présente invention concerne un dispositif pour la récupération et le franchissement de seuil de flottants, dont hydrocarbures, pollutions diverses, gaz, etc. ainsi que passe à poissons avec franchissement de seuil et d'obstacle.

Actuellement les moyens mis en oeuvre pour récupérer, voir aider à franchir un seuil aux flottants, que se soit sur des cours d'eau, canaux, conduits, etc. soit sur des plans liquides, tels mers, lacs, etc. font appel à des dispositifs de pompage ou de ramassage mécaniques souvent complexes, d'un entretien difficile et entraînant souvent des dépenses énergétiques importantes.

En ce qui concerne les moyens mis en oeuvre pour permettre aux poissons de franchir des barrages, retenues d'eau et autres obstacles, aussi bien en montaison qu'en dévalaison, ce sont essentiellement des moyens mécaniques, peu naturels, type ascenseur ou des rampes souvent difficiles à mettre en oeuvre.

D'après les recherches menées à ce jour, les systèmes existantes s'approchant au plus de l'utilisation du dispositif en mode passe à poissons avec franchissement de seuil et d'obstacle, conforme brevets FR 437 549 A (AUGUST ARSAC), US 3 347 586 A (SHARP EDWARD J) et US 2 688 461 A (ROY SIMPSON DE) du fait de leur conception sont incapables d'assurer à tout moment la circulation de poissons aussi bien en montaison, qu'en dévalaison.

Le dispositif selon l'invention, est simple à mettre en oeuvre, à entretenir et consomme peu d'énergie. Tirant parti de la pression atmosphérique et des forces qui régissent la flottabilité des corps dans un liquide, il apporte une solution technique novatrice aux problèmes posés. Il est constitué selon une première caractéristique d'au moins un réservoir, cuve, tube ou autre récipient, réalisé en matériaux étanches, rigides ou semi-rigides et conçu pour fonctionner totalement ou partiellement rempli de liquide, supportant l'utilisation, aussi bien, à pression atmosphérique, qu'en dépression interne. Il est définit par une ou deux parties basses conçues pour fonctionner immergées dans un ou deux plans liquides, dont l'un peut être supérieur à l'autre et comporte en chaque partie basse au moins un système d'ouverture/fermeture et qui est prolongée en sa base par des parois latérales définissant un canal axial passant sous ou au travers de la ou des ouvertures/fermetures du bas . Il est aussi définit par une partie haute, qui comporte au moins un système d'ouverture/fermeture conçu pour fonctionner soit émergée, soit immergée dans un autre plan liquide supérieur à celui ou ceux où est immergée la partie basse ou encore relié à la partie basse d'un autre dispositif supérieur, au quel il peut être associé en série.

Selon des modes particuliers de réalisation:
- les systèmes d'ouverture/fermeture peuvent être manuels ou à commande automatique et assurées par divers types de vannes, dont vannes papillon à axes plus au moins excentrées.
- pour une récupération et franchissement de seuil ou d'obstacle en continu, un ou plusieurs des systèmes d'ouverture/fermeture peuvent être assurés par des roues à palettes.
- une variante d'amorçage et de son maintien, peut consister à équiper le dispositif d'une pompe à vide reliée à une des ouvertures/fermetures du haut et ouverture/fermeture du bas ouverte à pomper l'air ou le gaz à l'intérieur du réservoir, ce qui fait remonter à l'intérieur du réservoir le liquide dans le quel la partie basse est immergé.

- un ou plusieurs flotteurs articulés anti-rupture de dépression peuvent être associés à la ou les ouvertures/fermetures du bas.
- les systèmes d'ouverture/fermeture du bas peuvent être équipés en sa base par un conduit définissant un canal axial passant au travers de la ou des ouvertures/fermetures du bas et qui est tourné vers le haut jusqu'à une hauteur supérieure à celle ou celles de l'ouverture qu'il équipe.
- le dispositif peut être équipé d'au moins une roue à aubes, motorisée ou entraînée par le courrant et ayant pour fonction d'entraîner les flottants vers la ou les ouvertures/fermetures du bas, ainsi que de créer une zone de moindres turbulences en son aval pour éviter des prises d'air et prévenir la rupture de dépression.
- le dispositif peut être équipé de bras flottants, par exemple en V, munis de grilles, pour retenir et dévier des macro déchets, ainsi que de jupes latérales permettant de canaliser vers la ou les ouvertures/fermetures du bas, une plus grande nappe de flottants.
- le dispositif peut être mis en oeuvre associé à des structures flottantes, fixes ou mobiles, remorquées, associées à des bateaux ou intégrées, dont par exemple à des bateaux type catamaran.
- le dispositif peut être équipé d'au moins une pompe à fluides pour remplir le réservoir et assurer son amorçage et réamorçage.

Selon des modes particuliers d'utilisation:
- le procédé de mise en oeuvre et d'amorçage du dispositif en mode simple de récupération de flottants ou gaz, consiste à placer le réservoir partie basse et ouverture/fermeture du bas immergée à la surface d'un plan liquide et la partie haute, ouverture/fermeture du haut émergée. Il suffit alors de l'amorcer en fermant l'ouverture/fermeture du bas et par ouverture/fermeture du haut ouverte à le remplir partiellement ou totalement, par exemple par pompage, de liquide identique à celui dans lequel la partie basse est immergée et ensuite à fermer l'ouverture/fermeture du haut et à ouvrir l'ouverture/fermeture du bas, ce qui met le liquide du réservoir en contact avec celui du plan liquide, ce qui sans prise d'air maintient le liquide en son intérieur, créant ainsi deux plans liquides communicants, dont l'un est supérieur à l'autre. Ce qui va alors permettre aux flottants ou gaz, se trouvant, ayant été amenés ou se déplaçant sous ou au travers de l'ouverture du bas, de s'élever, de façon naturelle, à la surface du plan liquide supérieur constitué à l'intérieur du réservoir et à y rester captés et d'où ils pourront, ouverture-fermeture du bas fermée, par une ouverture/fermeture du haut ouverte être récupérés.
- le procédé de mise en oeuvre et d'amorçage du dispositif en mode récupération de flottants et gaz avec franchissement de seuil consiste à placer le réservoir partie basse immergée à la surface d'un plan liquide ouverture-fermeture basse fermée et la partie haute immergée dans un second plan liquide qui lui est supérieur. Il suffit alors de l'amorcer en ouvrant l'ouverture/ fermeture du haut et à le remplir de ce même liquide, puis à fermer l'ouverture/fermeture du haut et à ouvrir l'ouverture/fermeture du bas, mettant le liquide du réservoir en contact avec celui du plan liquide ce qui sans prise d'air, crée une dépression à l'intérieur du réservoir, qui maintient le liquide en son intérieur, créant ainsi deux plans liquides communicants, dont l'un supérieur à l'autre. Ceci va permettre aux flottants ou gaz se trouvant, ayant été amenés ou se déplaçant sous ou à travers l'ouverture du bas de s'élever, de façon naturelle, à la surface du plan liquide supérieur constitué à l'intérieur du réservoir et ultérieurement ouverture-fermeture du bas fermée et ouverture/fermeture du haut ouverte, mettre le liquide du réservoir en contact avec celui du plan liquide supérieur, ce qui vas permettre aux flottants ou gaz de s'élever vers la surface du plan liquide supérieur, franchissant ainsi un seuil.
- le procédé de mise en oeuvre et d'amorçage du dispositif en mode passe à poissons avec franchissement de seuil, aussi bien en montaison qu'en dévalaison, consiste, après amorçage du dispositif, à ouvrir et à fermer en alternance avec une certaine régularité les ouvertures/ fermetures, permettant ainsi aux poissons de circuler aussi bien en montaison qu'en dévalaison. Il est possible de ne pas fermer totalement les ouvertures/fermetures pour laisser couler assez d'eau pour créer un courrant servant de guide aux poissons.
- le procédé de mise en oeuvre et d'amorçage du dispositif en mode récupération de flottants ou gaz, ainsi que passe à poissons avec franchissement de plusieurs seuils, consiste à assembler en série plusieurs réservoirs ouvertures/fermetures du haut des réservoirs inférieurs servant aussi d'ouverture/fermeture du bas pour les réservoirs supérieurs et après amorçage, à ouvrir et à fermer successivement les ouvertures-fermetures des divers réservoirs, permettant ainsi aux flottants ou gaz de s'élever et de franchir l'un après l'autre, plusieurs seuils et aux poissons de circuler aussi bien en montaison, qu'en dévalaison.
- le procédé de mise en oeuvre et d'amorçage du dispositif en mode passe à poissons avec franchissement de seuil et d'obstacle, consiste à installer le réservoir constitué de deux parties basses, comprenant au moins un système d'ouverture/fermeture par partie et dont chacune est immergée dans un de deux plans liquides séparées par un obstacle, au dessus duquel émerge la partie haute comportant au moins une ouverture/fermeture. Le processus d'amorçage consiste alors, à fermer les ouvertures/fermetures des deux parties basses et à remplir le réservoir par l'ouverture/fermeture du haut ouverte et ensuite, celle ci fermée, à ouvrir alternativement les ouvertures/fermetures de chaque partie basse, permettant ainsi aux poissons de circuler entre les deux plans liquides aussi bien en montaison qu'en dévalaison.

Les dessins annexes illustrent l'invention:
- les figures 1 représentent en coupe le dispositif de l'invention, en mode récupération de flottants. La figure 1A montre son positionnement, la figure 1B son remplissage pour amorçage et la figure 1C son utilisation en récupération de flottants.
- les figures 2 représentent en coupe le dispositif de l'invention en mode récupération de flottants intégré à une structure flottante (10) type catamaran. La variante représenté par la figure 2B équipé d'une roue à palettes, permet une récupération en continu.
- les figures 3 et 4 représentent en coupe (Fig 3) et en vue de dessus (Fig 4) le dispositif de l'invention en mode récupération de flottants associé à une structure flottante (10) ayant pour vocation à être remorquée.
- la figure 5 représente en coupe le dispositif de l'invention en mode récupération de flottants, équipant en fixe un conduit fermé à débit plein.
- la figure 6 représente en coupe le dispositif de l'invention en mode récupération de flottants, équipant en fixe un conduit fermé à débit variable
- les figures 7 représentent en coupe le dispositif de l'invention, en mode récupération et franchissement de seuil pour flottants. La figure 7A montre son positionnement et remplissage en amorçage, la figure 7B son utilisation en récupération et la figure 7C le franchissement de seuil.
- la figure 8 représente en coupe divers dispositifs, selon l'invention, installés en fixe et en mode passe à poissons.
- la figure 9 représente en coupe le dispositif de l'invention installé en fixe et en mode passe à poissons en continu.
- la figure 10 représente en coupe divers dispositifs selon l'invention installés en série et en fixe, en mode passe à poissons.
- la figure 11 en coupe et la figure 12 en vue de dessus, représentent divers dispositifs selon l'invention installés en fixe, flottant et en série, en mode récupération et franchissement de seuil pour flottants .
- la figure 13 représente en coupe le dispositif de l'invention en mode récupération et franchissement de seuil pour flottants intégré à une structure flottante (10) type catamaran et comportant deux dispositifs associés en série (R1 et R2).
- la figure 14 représente en coupe le dispositif de l'invention installé en fixe et en mode passe à poissons avec franchissement d'obstacle. La figure 14A représentant une variante avec franchissement en continu.

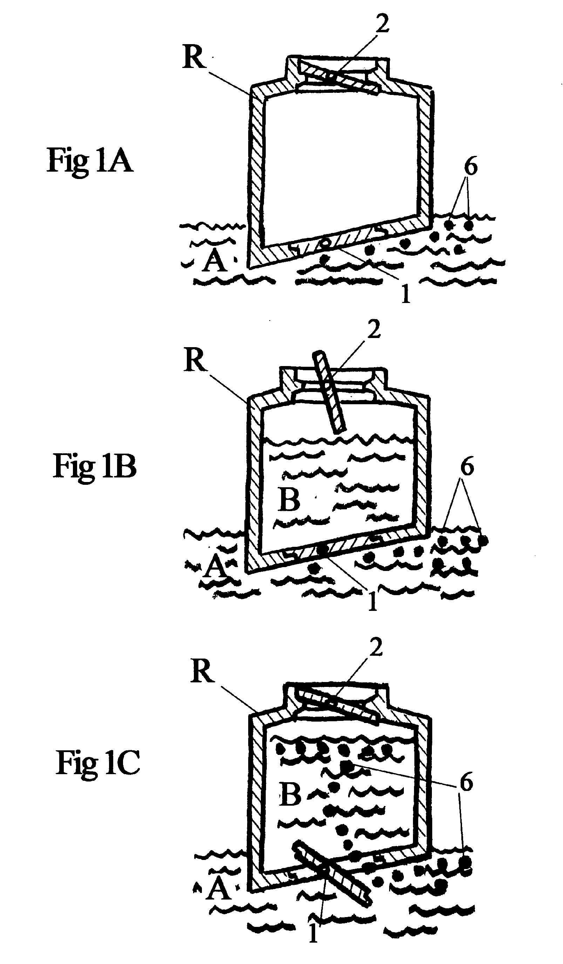

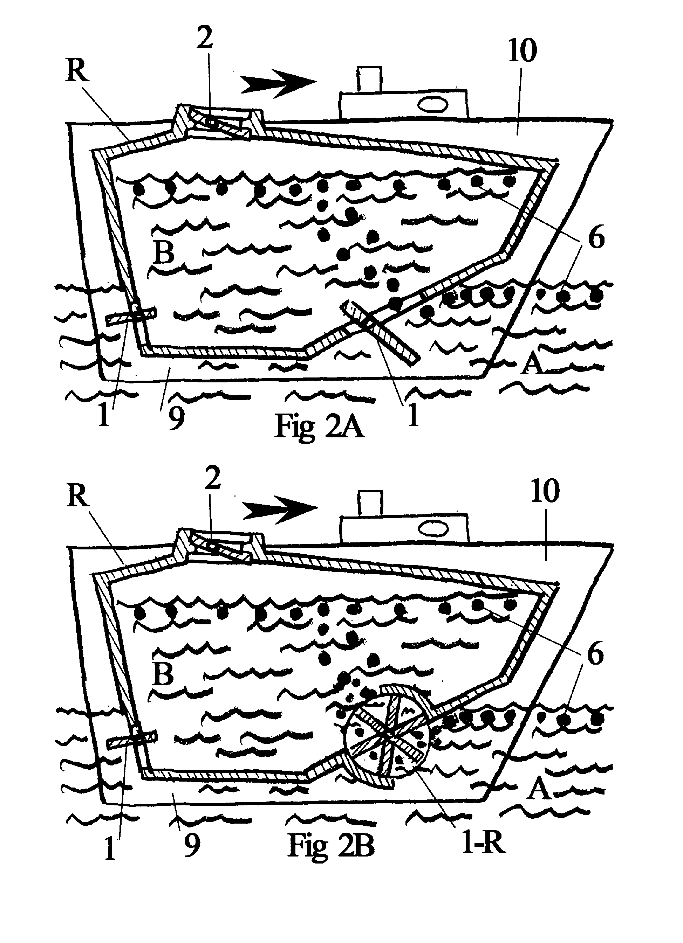

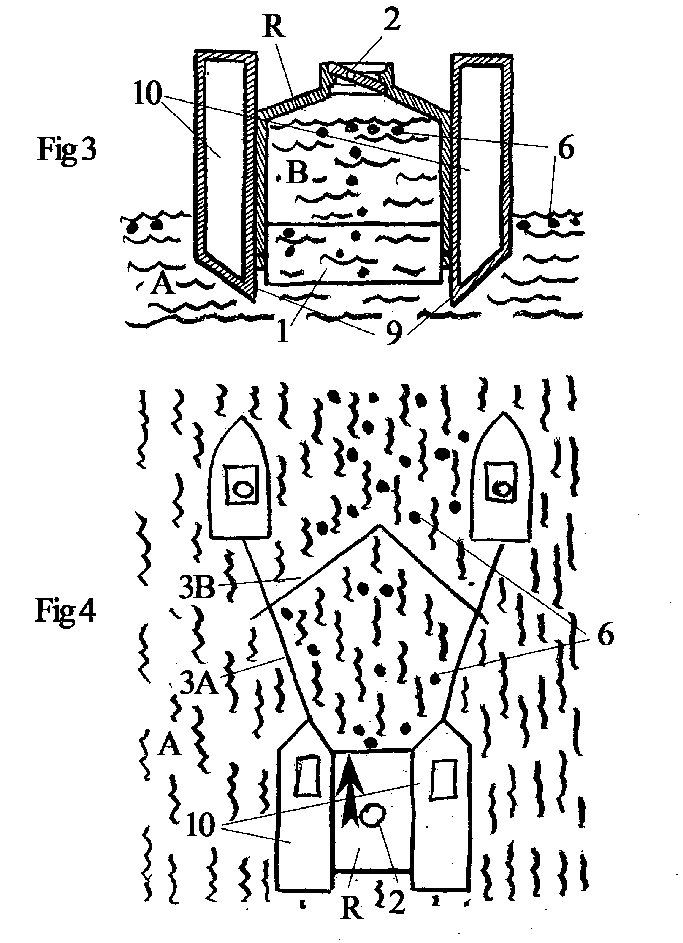

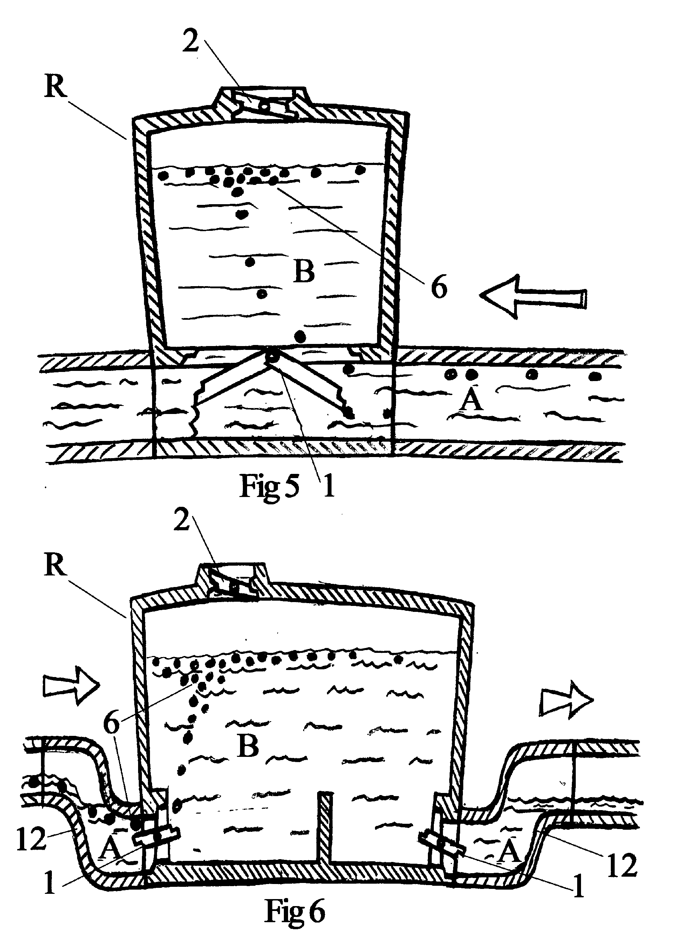

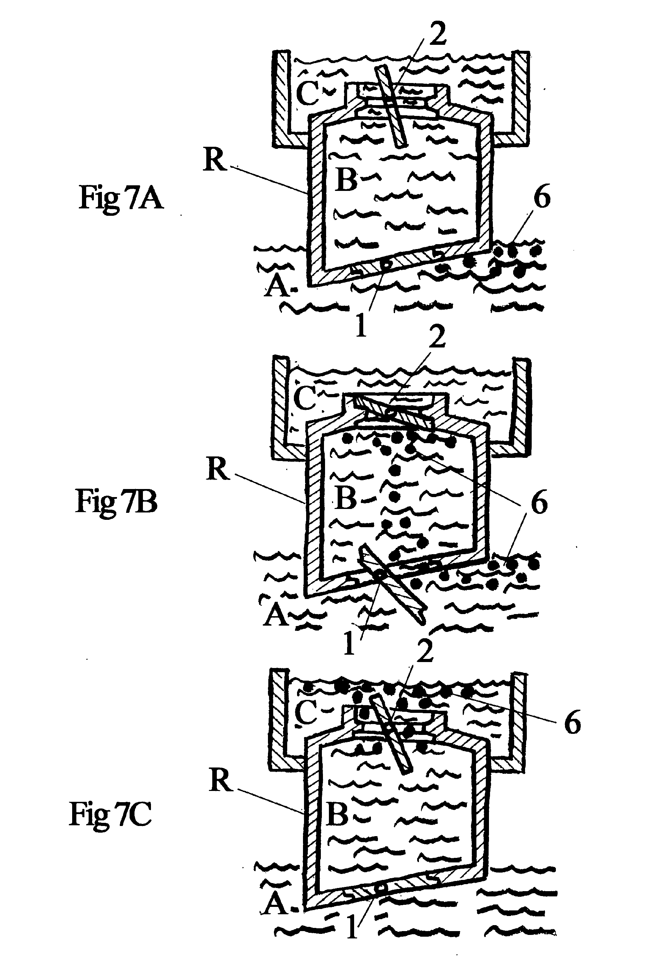

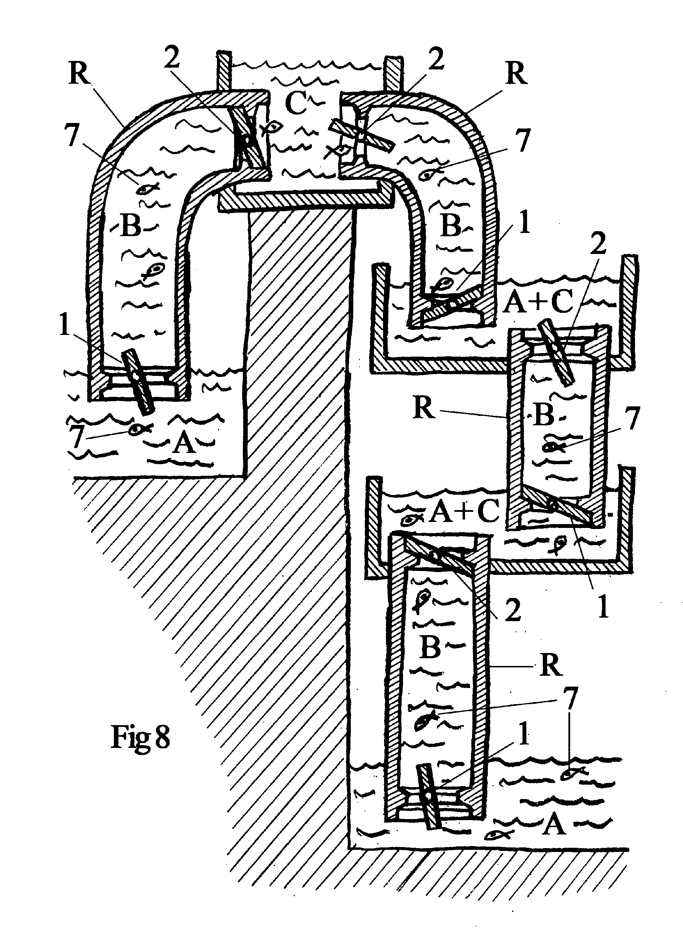

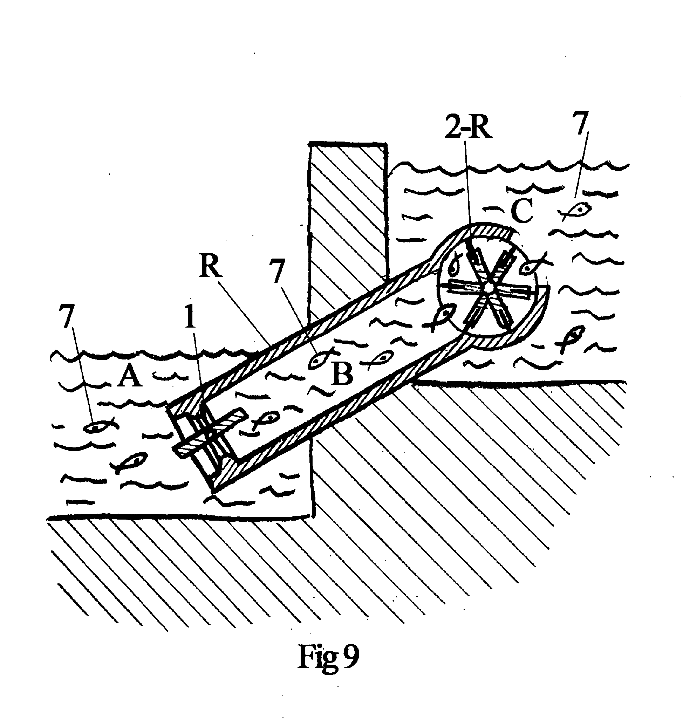

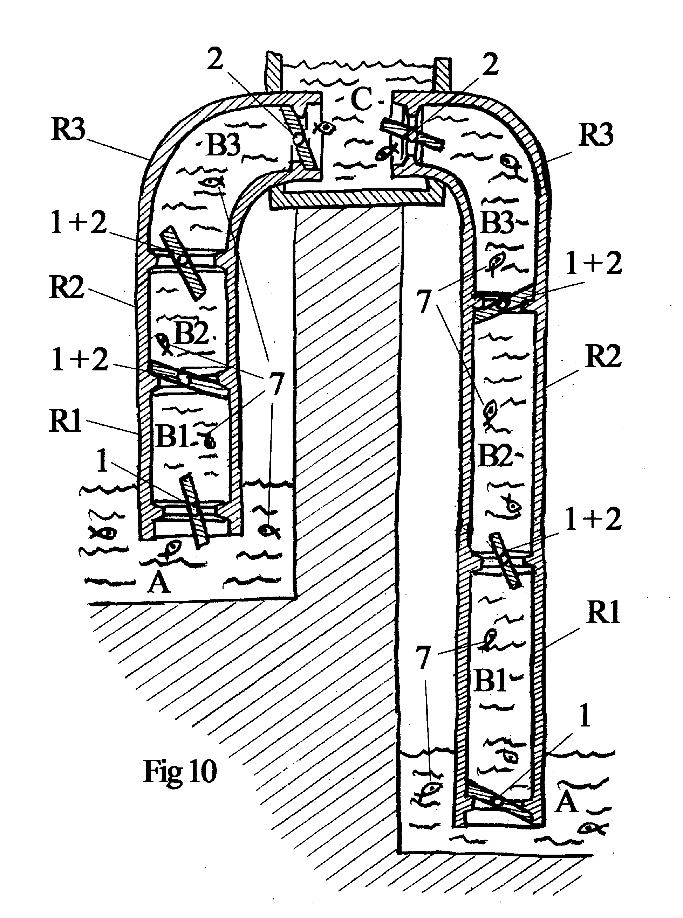

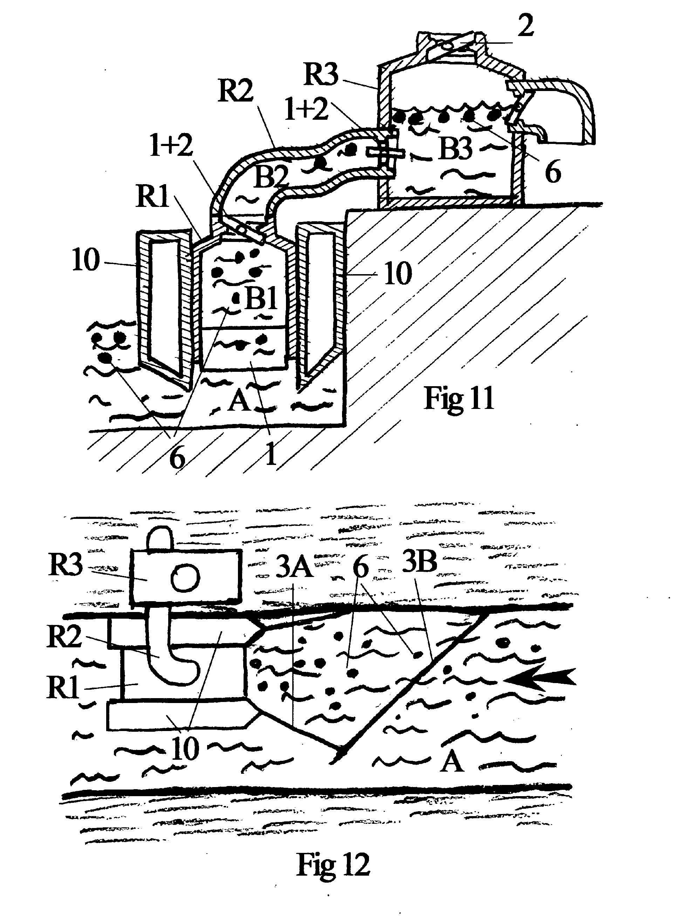

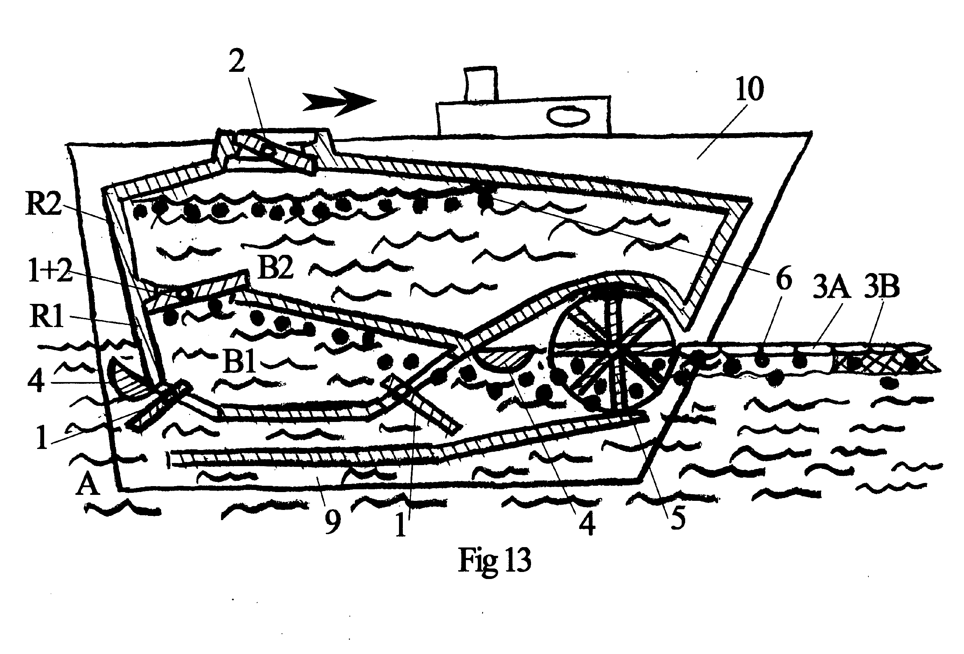

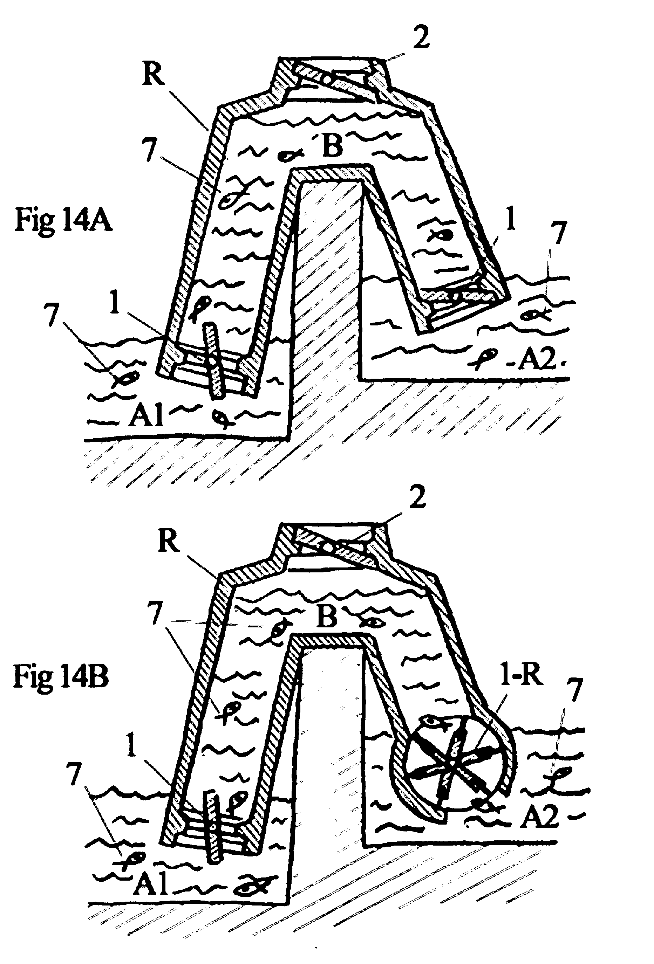

En référence à ces dessins:
- le dispositif est constitué d'au moins un réservoir, cuve, tube ou autre récipient (R), réalisé en matériaux étanches, rigides ou semi-rigides, conçu pour fonctionner totalement ou partiellement rempli de liquide (B) et supportant l'utilisation aussi bien, à pression atmosphérique, qu'en dépression interne. Il est définit par une (Fig 1 à 13) ou deux parties basses (Fig 14), conçues pour fonctionner immergées dans un (A) (Fig 1 à 13) ou deux plans liquides, dont l'un peut être supérieur à l'autre (A1 et A2) (Fig 14) et comprenant en chaque partie basse au moins un système d'ouverture/fermeture (1) et chaque partie basse du réservoir (R), est prolongé par des parois latérales (9) (Fig 2A, 2B, 3, 11, et 13) ou un conduit (Fig 5 et 6) définissant un canal axial longitudinal passant sous ou au travers de la ou des ouvertures/fermetures du bas (1) et définit par une partie haute, comprenant au moins un système d'ouverture/fermeture (2) conçue pour fonctionner soit émergée (Fig 1 à 6 et 14), soit immergée dans un autre plan liquide (C) supérieur à celui (A) où est immergée la partie basse (Fig 7 à 9) ou encore relié à la partie basse d'un autre dispositif supérieur auquel il peut être associé en série (R1, R2, R3, etc)(Fig 10 à 13).
- selon les modes de réalisation et de mise en oeuvre du dispositif, les systèmes d'ouverture/ fermeture (1 et 2) peuvent être manuels ou à commande automatique et assurées par divers types de vannes, dont vannes papillon à axes plus au moins excentrées.
- selon une variante, le mode de réalisation et de mise en oeuvre du dispositif, pour une récupération et franchissement de seuil ou d'obstacle en continu, consiste à équiper un ou plusieurs des systèmes d'ouverture/fermeture (1 et 2) par des roues à palettes (1-R Fig 2B, 2-R Fig 9 et 1-R Fig 14B).
- selon une variante, l'amorçage du dispositif et de son maintien, peut consister à équiper le dispositif d'une pompe à vide reliée à une des ouvertures/fermetures du haut (2) et ouverture/ fermeture du bas (1) ouverte à pomper l'air ou le gaz à l'intérieur du réservoir (R), ce qui fait remonter à l'intérieur du réservoir le liquide dans le quel la partie basse est immergée.
- selon les modes de réalisation et de mise en oeuvre, un ou plusieurs flotteurs articulés (4) anti-rupture de dépression peuvent être associés à la ou les ouvertures/fermetures du bas (1) (Fig 13).
- selon les modes de réalisation et de mise en oeuvre le ou les systèmes d'ouverture/ fermeture du bas (1), est ou sont prolongés en sa base par un conduit (12) (Fig 6) définissant un canal axial passant au travers de la ou des ouvertures/fermetures du bas et qui est tourné vers le haut jusqu'à une hauteur supérieure à celle ou celles de l'ouverture qu'il équipe.
- selon les modes de réalisation et de mise en oeuvre, le dispositif peut être équipé d'au moins une roue à aubes (5), motorisée ou entraînée par le courrant et ayant pour fonction d'entraîner les flottants vers la ou les ouvertures/fermetures du bas (1), ainsi que de créer une zone de moindres turbulences en son aval pour éviter des prises d'air et prévenir la rupture de dépression (Fig 13).
- selon les modes de réalisation et de mise en oeuvre, le dispositif peut être équipé de bras flottants, par exemple en V, pour retenir et dévier des macro déchets, munis de grilles (3B) ainsi que de jupes latérales (3A) permettant de canaliser vers la ou les ouvertures/fermetures du bas (1), une plus grande nappe de flottants (Fig 4, 12 et 13).
- selon les modes de réalisation et de mise en oeuvre, le dispositif peut être mis en oeuvre associé à des structures flottantes (10), fixes (Fig 11 et 12) ou mobiles, remorquées (Fig 3 et 4), associées ou intégrées, dont, par exemple, à des bateaux type catamaran (Fig 2A, 2B et 13).
- selon une variante non illustrée le dispositif peut être équipé d'au moins une pompe à fluides pour remplir le réservoir et assurer son amorçage et réamorçage.
- le procédé de mise en oeuvre et d'amorçage du dispositif en mode simple de récupération de flottants ou gaz, (Fig 1 à 6) consiste à placer le réservoir (R) partie basse et ouverture/fermeture du bas (1) immergée à la surface d'un plan liquide (A) et la partie haute et ouverture/fermeture du haut (2) émergée (Fig 1A) et à l'amorcer en fermant l'ouverture/fermeture du bas (1) et par ouverture/fermeture du haut (2) ouverte à le remplir partiellement ou totalement, par exemple, par pompage, de liquide (B) identique à celui dans lequel la partie basse est immergée (Fig 1B), et ensuite à fermer l'ouverture/fermeture du haut (2) et à ouvrir l'ouverture/fermeture du bas (1) (Fig 1C) ce qui met le liquide (B) du réservoir en contact avec celui du plan liquide (A), ce qui sans prise d'air maintien le liquide en son intérieur, créant ainsi deux plans liquides communicants, (A et B) dont l'un est supérieur à l'autre. Ceci va permettre aux flottants (6) ou gaz, se trouvant, ayant été amenés ou se déplaçant sous ou au travers l'ouverture du bas (1) de s'élever, de façon naturelle, à la surface du plan liquide supérieur (B) constitué à l'intérieur du réservoir et à y rester captés et d'où ils pourront, ouverture-fermeture du bas (1) fermée, par l'ouverture/fermeture du haut (2) ouverte être récupérés.
- selon une variante le procédé de mise en oeuvre et d'amorçage du dispositif en mode récupération de flottants et gaz avec franchissement de seuil (Fig. 7 à 9) consiste à placer le réservoir (R) partie basse immergée à la surface d'un plan liquide (A) ouverture-fermeture basse (1) fermée et la partie haute immergée dans un second plan liquide qui lui est supérieur (C) et à l'amorcer (Fig. 7A) en ouvrant l'ouverture/fermeture du haut (2) et à le remplir de ce même liquide, puis à fermer l'ouverture/fermeture du haut (2) et à ouvrir l'ouverture/fermeture du bas (1), mettant le liquide (B) du réservoir en contact avec celui du plan liquide (A) ce qui sans prise d'air maintient le liquide (B) en son intérieur, créant ainsi deux plans liquides communicants, dont l'un supérieur à l'autre. Ceci va permettre aux flottants (6) ou gaz se trouvant, ayant été amenés ou se déplaçant sous ou au travers de l'ouverture du bas (1) de s'élever, de façon naturelle, à la surface du plan liquide supérieur (B) constitué à l'intérieur du réservoir (Fig. 7B) et ultérieurement ouverture-fermeture du bas (1) fermée et ouverture/fermeture du haut (2) ouverte, mettre le liquide (B) en contact avec le plan liquide supérieur (C) ce qui va permettre aux flottants de s'élever vers la surface du plan liquide supérieur (C), franchissant ainsi un seuil (Fig. 7C).
- selon une autre variante le procédé de mise en oeuvre et d'amorçage du dispositif en mode passe à poissons avec franchissement de seuil (Fig. 7 à 9 ), consiste, après amorçage, à ouvrir et à fermer en alternance avec une certaine régularité les ouvertures/fermetures (1 et 2), permettant ainsi aux poissons de circuler aussi bien en montaison qu'en dévalaison.
- selon une autre variante le procédé de mise en oeuvre et d'amorçage du dispositif en mode récupération de flottants ou gaz, ainsi que passe à poissons avec franchissement de plusieurs seuils (Fig. 10 à 13), consiste à assembler en série plusieurs réservoirs (R1, R2, R3, etc.) ouvertures/ fermetures du haut (2) des réservoirs inférieurs servant aussi d'ouverture/fermeture du bas (1) pour les réservoirs supérieurs et après amorçage, à ouvrir et à fermer successivement les ouvertures-fermetures des divers réservoirs, permettant ainsi aux flottants ou gaz de s'élever et de franchir l'un après l'autre, plusieurs seuils et aux poissons de circuler aussi bien en montaison qu'en dévalaison.
- selon une autre variante le procédé de mise en oeuvre et d'amorçage du dispositif en mode passe à poissons avec franchissement de seuil et d'obstacle, consiste à installer le réservoir (R) constitué de deux parties basses (Fig 14A et 14B) comprenant au moins un système d'ouverture/ fermeture par partie (1A et 1B), dont chacune est immergée dans un de deux plans liquides (A1 et A2) séparées par un obstacle, au dessus duquel émerge la partie haute et son ouverture/fermeture (2). Le processus d'amorçage consiste alors à fermer les ouvertures/fermetures des deux parties basses (1A et 1B) et à remplir le réservoir par l'ouverture/fermeture du haut (2) et ensuite, celle ci fermée, à ouvrir alternativement les ouvertures/fermetures de chaque partie basse (1A et 1B), permettant ainsi aux poissons de circuler entre les deux plans liquides (A1 et A2) aussi bien en montaison qu'en dévalaison.

Par sa polyvalence le dispositif selon l'invention peut être mis en oeuvre de divers modes:
- en modes récupération et en récupération et franchissement de un ou plusieurs seuils pour flottants, il peut être utilisé en fixe ou en flottant sur des cours d'eau, conduits, égouts, etc. ainsi qu'en flottant mobile, tracté, associé ou intégré à des engins flottantes, par exemple des bateaux, dont catamarans et être utilisé en mer, sur des lacs, fleuves ou autres plans liquides, pour récupérer et même transporter, voir aider à franchir un ou plusieurs seuils à divers flottants, dont hydrocarbures, marées noires, diverses pollutions aquatiques, mousses, poissons morts, algues, objets flottants, bois, ...
- en modes récupération et récupération et franchissement de un ou plusieurs seuils pour gaz émergeants à la surface d'un liquide.
- en modes passe à poissons avec franchissement de un ou plusieurs seuils, ainsi que franchissement d'obstacle il peut équiper barrages ou autres dénivelés ou obstacles entre deux plans d'eau, permettant aux poissons de circuler entre eux, aussi bien en montaison, qu'en dévalaison.

## Revendications

1. Dispositif pour la récupération et le franchissement de seuil de flottants, dont hydrocarbures, pollutions diverses, gaz, etc. ainsi que passe à poissons avec franchissement de seuil, **caractérisé en ce qu'**il est constitué d'au moins un réservoir, cuve, tube ou autre récipient, réalisé en matériaux étanches, rigides ou semi-rigides, conçu pour fonctionner totalement ou partiellement rempli de liquide et supportant l'utilisation aussi bien, à pression atmosphérique, qu'en dépression interne et qui est définit par une ou deux parties basses, conçues pour fonctionner immergées dans un ou deux plans liquides, dont l'un peut être supérieur à l'autre et comprenant en chaque partie basse au moins un système d'ouverture/fermeture, qui est prolongée en sa base par des parois latérales ou un conduit définissant un canal axial passant sous ou au travers de la ou des ouvertures/fermetures du bas et définit par une partie haute, comprenant au moins un système d'ouverture/fermeture conçue pour fonctionner, soit émergée, soit immergée dans un autre plan liquide supérieur à celui où est immergée la partie basse ou encore relié à la partie basse d'un autre dispositif supérieur, au quel il est associé en série.

2. Dispositif selon revendication 1 **caractérisé en ce que** un ou plusieurs des systèmes d'ouverture/fermeture sont assurés par des vannes papillon à axes plus au moins excentrés.

3. Dispositif selon revendication 1 **caractérisé en ce que** un ou plusieurs des systèmes d'ouverture/fermeture sont assurés par des roues à palettes à axes plus au moins excentrés.

4. Dispositif selon l'une quelconque des revendication 1, 2 ou 3 **caractérisé en ce que** le dispositif est équipé d'une pompe à vide reliée à la ou à l'une des ouvertures/fermetures du haut.

5. Dispositif selon l'une quelconque des revendication 1, 2 ou 3 **caractérisé en ce qu'**un ou plusieurs flotteurs articulés sont associés à la ou les ouvertures/fermetures du bas.

6. Dispositif selon revendication 1 **caractérisé en ce que** le ou les systèmes d'ouverture/ fermeture du bas, est ou sont prolongés en sa base par un conduit définissant un canal axial passant au travers de la ou des ouvertures/fermetures du bas et qui est tourné vers le haut jusqu'à une hauteur supérieure à celle ou celles de l'ouverture qu'il équipe.

7. Dispositif selon revendication 1 **caractérisé en ce qu'**il est équipé d'au moins une roue à aubes, motorisée ou entraînée par le courrant.

8. Dispositif selon revendication 1 **caractérisé en ce qu'**il est équipé de bras flottants, en V, munis de grilles, ainsi que de jupes latérales.

9. Dispositif selon revendication 1 **caractérisé en ce qu'**il est mis en oeuvre associé à des bateaux type catamaran.

10. Dispositif selon revendication 1 **caractérisé en ce qu'**il est équipé d'au moins une pompe à fluides.

11. Procédé de mise en oeuvre et d'amorçage du dispositif selon revendication 1, en mode simple de récupération de flottants ou gaz, **caractérisé en ce qu'**il consiste à placer le réservoir partie basse et ouverture/fermeture du bas immergée à la surface d'un plan liquide et la partie haute et ouverture/fermeture du haut émergée et à l'amorcer en fermant l'ouverture/fermeture du bas et par ouverture/fermeture du haut ouverte à le remplir partiellement ou totalement, par exemple par pompage, de liquide identique à celui dans lequel la partie basse est immergée et ensuite à fermer l'ouverture/fermeture du haut et à ouvrir l'ouverture/fermeture du bas ce qui met le liquide du réservoir en contact avec celui du plan liquide, ce qui sans prise d'air maintien le liquide en son intérieur, créant ainsi deux plans liquides communicants, dont l'un est supérieur à l'autre.

12. Procédé de mise en oeuvre et d'amorçage du dispositif selon revendication 1, en mode récupération de flottants ou gaz avec franchissement de seuil, **caractérisé en ce qu'**il consiste à placer le réservoir partie basse immergée à la surface d'un plan liquide ouverture/fermeture basse fermée et la partie haute immergée dans un second plan liquide qui lui est supérieur et à l'amorcer en ouvrant l'ouverture/fermeture du haut et à le remplir de ce même liquide, puis à fermer l'ouverture/fermeture du haut et à ouvrir l'ouverture/fermeture du bas, mettant le liquide du réservoir en contact avec celui du plan liquide inférieur, ce qui sans prise d'air maintien le liquide en son intérieur, créant ainsi deux plans liquides communicants, dont l'un supérieur à l'autre et ultérieurement ouverture/fermeture du bas fermée et ouverture/fermeture du haut ouverte, à mettre le liquide du réservoir en contact avec celui du plan liquide supérieur.

13. Procédé de mise en oeuvre et d'amorçage du dispositif, selon l'une quelconque des revendication 1 et 12, en mode passe à poissons avec franchissement de seuil, **caractérisé en ce qu'**il consiste, après amorçage, à ouvrir et à fermer en alternance avec une certaine régularité les ouvertures/fermetures du bas et du haut.

14. Procédé de mise en oeuvre et d'amorçage du dispositif, selon l'une quelconque des revendications 1, 12 et 13, en mode récupération de flottants ou gaz, ainsi que passe à poissons avec franchissement de plusieurs seuils, **caractérisé en ce qu'**il consiste à assembler en série plusieurs réservoirs, les systèmes d'ouverture/fermeture du haut des réservoirs inférieurs servant aussi de systèmes d'ouverture/fermeture du bas pour les réservoirs supérieurs et après amorçage, à ouvrir et à fermer successivement les ouvertures/fermetures des divers réservoirs.

15. Procédé de mise en oeuvre et d'amorçage du dispositif selon revendication 1, en mode passe à poissons avec franchissement de seuil et d'obstacle, **caractérisé en ce qu'**il consiste à installer le réservoir constitué de deux parties basses comprenant au moins un système d'ouverture/fermeture par partie, dont chacune est immergée dans un des deux plans liquides séparées par un obstacle, au dessus duquel émerge la partie haute et son ouverture/fermeture et dont le processus d'amorçage consiste à fermer les ouvertures/fermetures des deux parties basses et à le remplir par l'ouverture/fermeture du haut et ensuite, celle-ci fermée, à ouvrir alternativement les ouvertures/fermetures de chaque partie basse.
